# EUROPEAN PATENT APPLICATION

(11) **EP 4 730 895 A1**
(43) Date of publication of application: **22.04.2026**
(21) Application number: 25208382.9
(22) Date of filing: 13.10.2025
(51) Int. Cl.: H04W 72/566, H04W 72/1268, H04W 72/23

(54) **METHODS AND APPARATUSES FOR ENHANCED LOGICAL CHANNEL PRIORITIZATION IN MOBILE COMMUNICATIONS**

(30) Priority: 15.10.2024 US 202463707209 P
(71) Applicant: HTC Corporation, Taoyuan City 330 (TW)
(72) Inventor: LEE, Yen-Yi, 330 Taoyuan City (TW)
(74) Representative: Klang, Alexander H.

(57) **Abstract**

Various solutions for enhanced logical channel prioritization (LCP) in mobile communications are described. An apparatus may select a plurality of logical channels for an uplink (UL) grant, and allocate resources of the UL grant to one or more of the logical channels. At least one of the one or more of the logical channels carries first data with a first remaining time of a first associated packet data convergence protocol (PDCP) discard timer less than a threshold and carries second data with a second remaining time of a second associated PDCP discard timer greater than or equal to the threshold. In particular, the first data is prioritized over the second data during the allocation of the resources of the UL grant. Then, the apparatus may perform a new transmission to a network node based on the allocation of the resources of the UL grant.

## Description

### TECHNICAL FIELD

The present disclosure is generally related to mobile communications and, more particularly, to enhanced logical channel prioritization (LCP) in mobile communications.

### BACKGROUND

Unless otherwise indicated herein, approaches described in this section are not prior art to the claims listed below and are not admitted as prior art by inclusion in this section.

The wireless communications network has grown exponentially over the years. A long-term evolution (LTE) system offers high peak data rates, low latency, improved system capacity, and low operating cost resulting from simplified network architecture. LTE systems, also known as the 4^{th} generation (4G) system, also provide seamless integration to older wireless networks, such as GSM, CDMA, and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, each referred to as user equipment (UE). Alternatively, a wireless network may include a hybrid of 2G/3G/4G systems. In 3^{rd} generation partner project (3GPP), the next generation mobile network (NGMN) board has decided to focus the future NGMN activities on defining the end-to-end requirements for 5^{th} generation (5G) new radio (NR) systems, 5G-advanced systems, and 6G systems.

LCP is a medium access control (MAC) layer procedure that is responsible for selecting which data to transmit when the available radio resources for uplink (UL) transmission are limited. In 3GPP Release 18 for 5G NR, a priority-based token bucket algorithm is adopted for UL resource allocation in the LCP procedure, where each logical channel is configured with a priority, a prioritized bit rate (PBR), and a bucket size duration (BSD). The basic idea is to meet the PBR for all selected logical channels in a decreasing priority order based on whether there are tokens available in the bucket of each logical channel. After the PBR of all selected logical channels is met, if any UL resource remains, all selected logical channels would be served in a strict decreasing priority order, regardless of the number of tokens in their buckets. Accordingly, the priority-based token bucket algorithm may achieve PBR-based fairness.

However, there may be some issues with the current LCP procedure. For example, the priority-based token bucket algorithm does not take into account the transmission requirement of delay-critical data in logical channels. In the cases where there is delay-critical data in a selected logical channel with a positive number of tokens in the bucket (i.e., Bj > 0), the selected logical channel may not be allocated resources to transmit its delay-critical data if it is a lower-priority logical channel, while other logical channels with higher priorities and having non-delay-critical data are allocated with resources to transmit their non-delay-critical data. Furthermore, there are cases where the non-delay-critical data within a logical channel may be allocated with resources before the delay-critical data within the same logical channel if the non-delay-critical data arrives in the logical channel earlier than the delay-critical data (i.e., the non-delay-critical data arrives in the buffer of the logical channel before the delay-critical data, and thus, is buffered in front of the delay-critical data). As a result, non-delay critical data (e.g., from other logical channels with higher priorities, or from the same logical channel) may occupy the uplink resources, causing delay-critical data (i.e., data with low remaining time) to be delayed and unable to meet the delay requirements. That is, the current LCP procedure may not ensure the in-time transmission of the delay-critical data, and this is detrimental to applications or services that require low-latency communication, such as extended reality (XR), remote control and teleoperation (e.g., telesurgery), industrial automation, and vehicle-to-everything (V2X) applications, etc.

Therefore, there is a need to provide proper schemes to address this issue.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is proposing schemes, concepts, designs, systems, methods, and/or apparatus pertaining to enhanced LCP in mobile communications. It is believed that the above-described issue would be avoided or otherwise alleviated by implementing one or more of the proposed schemes described herein.

In one aspect, an apparatus may comprise a transceiver that, during operation, wirelessly communicates with a network node. The apparatus may also comprise a processor communicatively coupled to the transceiver. The processor, during operation, may perform operations comprising selecting a plurality of logical channels for an UL grant. The processor may also perform operations comprising allocating resources of the UL grant to one or more of the plurality of logical channels, wherein at least one of the one or more of the plurality of logical channels carries first data with a first remaining time of a first associated packet data convergence protocol (PDCP) discard timer less than a threshold and carries second data with a second remaining time of a second associated PDCP discard timer greater than or equal to the threshold, and the first data is prioritized over the second data during the allocation of the resources of the UL grant. The processor may further perform operations comprising performing, via the transceiver, a new transmission to the network node based on the allocation of the resources of the UL grant.

In one aspect, a network node may comprise a transceiver which, during operation, wirelessly communicates with an apparatus. The network node may also comprise a processor communicatively coupled to the transceiver. The processor, during operation, may perform operations comprising transmitting, via the transceiver, a radio resource control (RRC) signaling to the apparatus, wherein the RRC signaling configures a threshold. The processor may further perform operations comprising receiving, via the transceiver, a new transmission from the apparatus based on an allocation of resources of an UL grant, wherein the resources of the UL grant are allocated to one or more of the plurality of logical channels, and at least one of the one or more of the plurality of logical channels carries first data with a first remaining time of a first associated PDCP discard timer less than a threshold and carries second data with a second remaining time of a second associated PDCP discard timer greater than or equal to the threshold, and the first data is prioritized over the second data during the allocation of the resources of the UL grant.

It is noteworthy that, although description provided herein may be in the context of certain radio access technologies, networks and network topologies such as LTE, LTE-Advanced, LTE-Advanced Pro, 5G, NR, Internet-of-Things (IoT) and Narrow Band Internet of Things (NB-loT), Industrial Internet of Things (lloT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale, as some components may be shown to be out of proportion than the size in actual implementation in order to clearly illustrate the concept of the present disclosure.
FIG. 1 is a diagram depicting an example scenario of the priority-based token bucket algorithm for UL resource allocation in the LCP procedure under current 5G NR framework.
FIG. 2 is a diagram depicting an example scenario of a communication environment in which various solutions and schemes in accordance with the present disclosure may be implemented.
FIG. 3 is a diagram depicting an example scenario of the enhanced LCP procedure in accordance with an implementation of the present disclosure.
FIG. 4 is a diagram depicting an example scenario of the UL resource allocation in the enhanced LCP procedure in accordance with an implementation of the present disclosure.
FIG. 5 is a block diagram of an example communication system in accordance with an implementation of the present disclosure.
FIG. 6 is a flowchart of an example process in accordance with an implementation of the present disclosure.
FIG. 7 is a flowchart of another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes, and/or solutions pertaining to enhanced LCP in mobile communications. According to the present disclosure, a number of possible solutions may be implemented separately or jointly. That is, although these possible solutions may be described below separately, two or more of these possible solutions may be implemented in one combination or another.

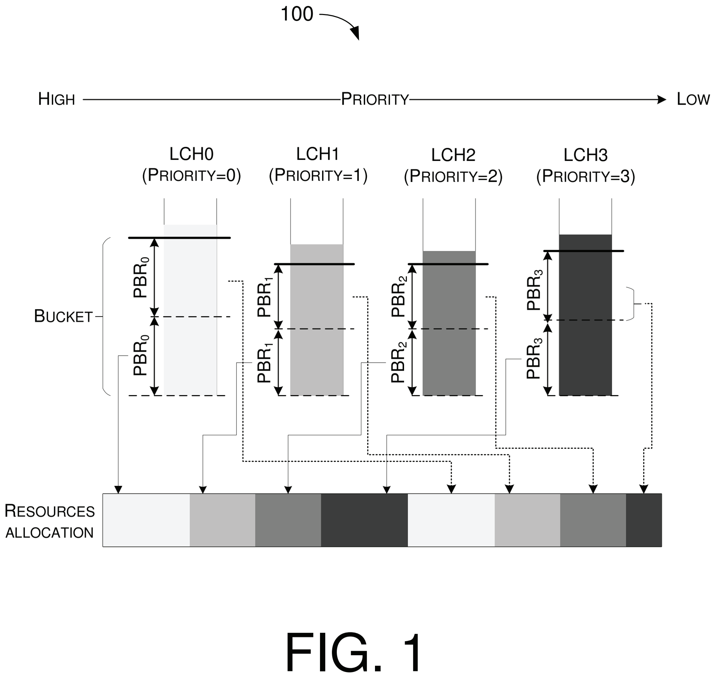

In the LCP procedure under current 5G NR framework, each logical channel is associated with a priority, a PBR, and a BSD, where the number of tokens (denoted as Bj) in the bucket of each logical channel is initialized to zero when the logical channels are established. Then, for each logical channel, the MAC entity increments Bj by the product PBR × T before every instance of the LCP procedure, where T is the time elapsed since Bj was last incremented. If the value of Bj is greater than the bucket size (i.e., PBR × BSD), Bj is set to the bucket size. FIG. 1 illustrates an example scenario 100 of the priority-based token bucket algorithm for UL resource allocation in the LCP procedure under current 5G NR framework. As shown in FIG. 1, each logical channel (LCH0-LCH3) is configured with a priority, and a lower priority value indicates a higher priority (i.e., the priority of value=0 is the highest and the priority of value=3 is the lowest). After selecting logical channels for an UL grant, all selected logical channels with Bj > 0 are allocated resources in a decreasing priority order to meet the PBRs for all selected logical channels. After the resource allocation, Bj of each logical channel is decremented by the total size of MAC service data units (SDUs) served to the logical channel j. Then, if any UL resource remains, all selected logical channels are served in a strict decreasing priority order (regardless of the value of Bj) until either the data for that logical channel or the UL grant is exhausted, whichever comes first. It should be noted that, in the present disclosure, the selection of logical channels in the LCP procedure is performed by the rules specified in 3GPP standards, and a detailed description thereof is omitted herein for brevity.

Although the priority-based token bucket algorithm adopted in the LCP procedure may achieve PBR-based fairness, it does not take into account the transmission requirement of delay-critical data in logical channels. In the cases where there is delay-critical data in a low-priority logical channel with a positive number of tokens in the bucket, the low-priority logical channel may not be allocated resources to transmit the delay-critical data if there are other logical channels with higher priorities, even though there is only non-delay-critical data in these high-priority logical channels. Furthermore, there are cases where the non-delay-critical data within a logical channel may be allocated with resources before the delay-critical data within the same logical channel if the non-delay-critical data is buffered in front of the delay-critical data. Consequently, the current LCP procedure may not ensure the in-time transmission of the delay-critical data.

In view of the above, the present disclosure proposes a number of schemes pertaining to enhanced LCP in mobile communications. According to the schemes of the present disclosure, a specific threshold may be introduced in the LCP procedure to allow the delay-critical data with tight remaining time (i.e., the remaining time is less than the specific threshold) to be allocated with UL transmission (Tx) resources before other delay-critical data (whose remaining time is greater than or equal to the specific threshold) or non-delay-critical data. In one example, the prioritization of the delay-critical data with tight remaining time may be performed across different logical channels (LCHs), i.e., the delay-critical data with tight remaining time in a lower-priority logical channel may be transmitted before non-delay-critical data (and/or delay-critical data with more remaining time) in a higher-priority logical channel. In another example, the prioritization of the delay-critical data with tight remaining time may be performed within one logical channel (or called intra-LCH prioritization), i.e., delay-critical data with tight remaining time may be transmitted before non-delay-critical data (and/or delay-critical data with more remaining time) within the same logical channel even if the non-delay-critical data is buffered in front of the delay-critical data with tight remaining time within the logical channel. Accordingly, by applying the schemes of the present disclosure, the delay-critical data with tight remaining time will be prioritized for UL resource allocation, which allows the delay requirements to be met for the applications/services that require low-latency communication.

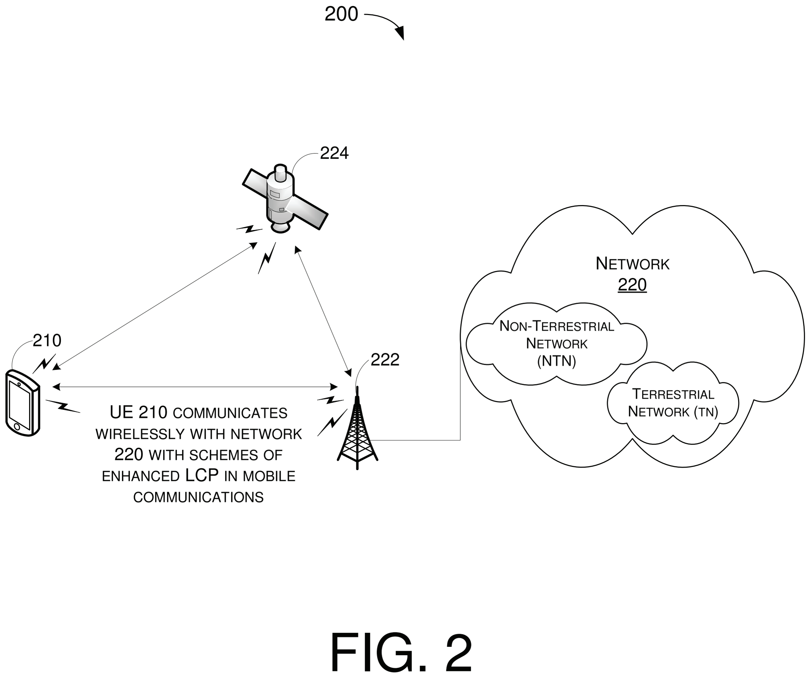

FIG. 2 illustrates an example scenario 200 of a communication environment in which various solutions and schemes in accordance with the present disclosure may be implemented. Scenario 200 involves a UE 210 in wireless communication with a network 220 (e.g., a wireless network including a non-terrestrial network (NTN) and a TN) via at least a terrestrial network node 222 (e.g., a base station (BS) such as an eNB, a gNB, or a transmission/reception point (TRP)) and/or at least a non-terrestrial network node 224 (e.g., a satellite). For example, the terrestrial network node 222 may form a TN serving cell for wireless communication with the UE 210, or the terrestrial network node 222 and the non-terrestrial network node 224 may form an NTN serving cell for wireless communication with the UE 210. In some implementations, the network 220 may be a 4G/5G/B5G/6G network, and the UE 210 may be a smartphone, a tablet computer, a laptop computer, or a notebook computer. Alternatively, the network 220 may be an loT/ NB-loT/lloT network, and the UE 210 may be an loT device such as an NB-loT UE or an enhanced machine-type communication (eMTC) UE (e.g., a bandwidth reduced low complexity (BL) UE or a coverage enhancement (CE) UE). In such communication environment, the UE 210, the network 220, the terrestrial network node 222, and/or the non-terrestrial network node 224 may implement various schemes pertaining to enhanced LCP in mobile communications in accordance with the present disclosure, as described below. It is noteworthy that, while the various proposed schemes may be individually or separately described below, in actual implementations, some or all of the proposed schemes may be utilized or otherwise implemented jointly. Of course, each of the proposed schemes may be utilized or otherwise implemented individually or separately.

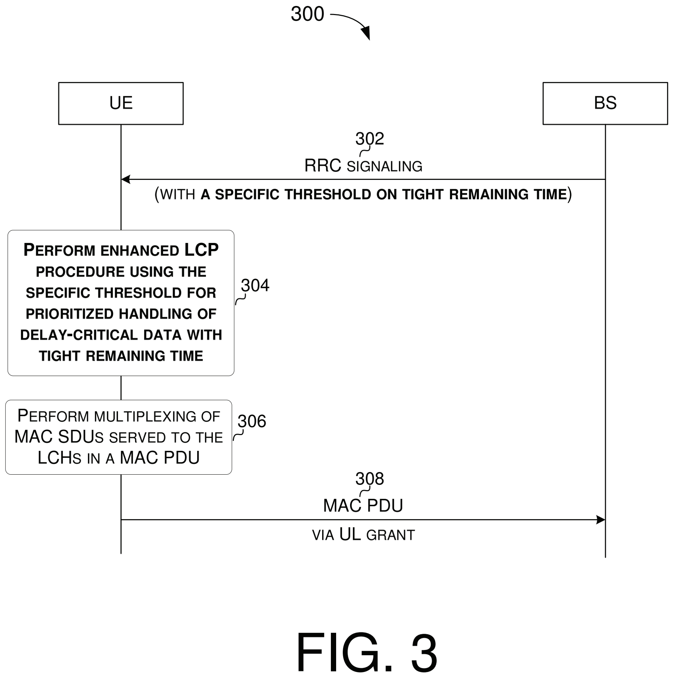

FIG. 3 illustrates an example scenario 300 of the enhanced LCP procedure in accordance with an implementation of the present disclosure. In step 302, the UE receives an RRC signaling from the BS. Specifically, the RRC signaling includes the configuration of logical channels for the UE. The configuration may be contained in a LogicalChannelConfig information element (IE) in the RRC signaling. The LogicalChannelConfig IE may include legacy logical channel parameters, such as a priority, a PBR, and a BSD for each logical channel, where the priority, the PBR, and the BSD may be used for UL resource allocation. Specifically, the data (e.g., each PDCP SDU) of a logical channel is associated with a discard timer (e.g., PDCP discardTimer), and if the remaining time of the discard timer is less than a remainingTimeThreshold (i.e., a threshold on remaining time for triggering a delay status reporting (DSR) for the corresponding logical channel within a logical channel group (LCG), which can be configured in the MAC-CellGroupConfig IE), the data is considered as delay-critical data. If the data does not get transmitted before the discard timer expires, then the data is discarded. Furthermore, the LogicalChannelConfig IE may also include an logical channel parameter, such as a specific threshold, which is used to prioritize the delay-critical data with tight remaining time (i.e., with a remaining time less than the specific threshold) during the UL resource allocation.

Next, in step 304, the UE performs the enhanced LCP procedure using the specific threshold for prioritized handling of delay-critical data with tight remaining time of the discard timer, as will be described in detail in the following embodiments. Specifically, the enhanced LCP procedure includes the process of UL resource allocation for a new transmission with an UL grant (e.g., a configured grant received via the same or different RRC signaling, or a dynamic grant received via a downlink control information (DCI)), and the UL resource allocation is performed with the prioritization of the delay-critical data with tight remaining time based on the specific threshold. In step 306, the UE multiplexes the MAC SDUs served to the logical channels in a MAC protocol data unit (PDU). Then, in step 308, the MAC PDU is passed down to the Physical Layer (or called Layer-1 (L1)) through a transport channel for a new transmission on the UL grant to the BS.

To be more specific, the process of the UL resource allocation may include two rounds of resource allocation. In the first round of resource allocation, the MAC entity at the UE may allocate resources to the logical channels as follows. The logical channels, that are selected for the UL grant with Bj > 0 (Bj is maintained for each logical channel j) and contain delay-critical data with remaining time less than the specific threshold, are allocated resources (to these delay-critical data) in a decreasing priority order or in an order of the remaining times of these delay-critical data. If the PBR of a logical channel is set to infinity, the MAC entity may allocate resources for all the data that is available for transmission on the logical channel before meeting the PBR of the lower priority logical channel(s). Then, the MAC entity may decrement Bj by the total size of MAC SDUs served to logical channel j above. If any resources remain, the logical channels selected for the UL grant with Bj > 0 are allocated resources in a decreasing priority order. Again, the MAC entity may decrement Bj by the total size of MAC SDUs served to logical channel j above.

After the first round of resource allocation, if any resources remain, then the process may continue with the second round of resource allocation. Specifically, in the second round of resource allocation, all the logical channels selected for the UL grant are served in a strict decreasing priority order (regardless of the value of Bj) until either the data for that logical channel or the UL grant is exhausted, whichever comes first. For the second round of resource allocation, logical channels applied with equal priority should be served equally.

In some implementations, the delay-critical data with a remaining time less than the specific threshold in the logical channels selected for the UL grant with Bj > 0 may be transmitted in a decreasing logical channel priority order. That is, the delay-critical data with a remaining time less than the specific threshold within a higher-priority logical channel may be transmitted before the delay-critical data with a remaining time less than the specific threshold within a lower-priority logical channel. Also, the delay-critical data with a remaining time less than the specific threshold may be transmitted before other delay-critical data (i.e., with a remaining time not less than the specific threshold) or non-delay-critical data in a same logical channel. It should be noted that in such embodiments, the prioritization of signaling radio bearers (SRBs) remains, i.e., SRBs are still prioritized over data radio bearers (DRBs) and certain MAC control elements (CEs) are sent with higher priority than other data.

In some implementations, the delay-critical data with a remaining time less than the specific threshold in the logical channels selected for the UL grant with Bj > 0 may be transmitted in an order of the value of their remaining times, instead of an order of the priorities of the corresponding logical channels. That is, the delay-critical data with lower remaining time (e.g., in lower-priority logical channels) may be transmitted before the delay-critical data with higher remaining time or non-critical data (e.g., in higher-priority logical channels). Also, the delay-critical data with a remaining time less than the threshold may be transmitted before other delay-critical data (with a remaining time not less than the threshold) or non-delay-critical data in a same logical channel. It should be noted that in such embodiments, the prioritization of SRBs remains, i.e., SRBs are still prioritized over DRBs and certain MAC CEs are sent with higher priority than other data.

In some implementations, the specific threshold may be the remainingTimeThreshold (i.e., the threshold on remaining time for triggering a DSR for a logical channel within a logical channel group). For example, the remainingTimeThreshold may be configured for a logical channel group via the MAC-CellGroupConfig IE. This threshold may be an independent per-LCG remaining time threshold, i.e., the thresholds for delay-critical data within different logical channel groups may be different.

In some implementations, the specific threshold (e.g., called priorityAdjustmentThreshold) may be configured for a logical channel in the LogicalChannelConfig IE. For example, new parameter may be added in the LogicalChannelConfig IE to serve as the specific threshold. This threshold may be an independent per-LCH remaining time threshold, i.e., the thresholds for delay-critical data within different logical channels may be different.

In some implementations, the specific threshold may be used for determining whether an additional (logical channel) priority is applied for a logical channel within the logical channel group. Specifically, the specific threshold may be called priorityAdjustmentThreshold which indicates a remaining time threshold for determining whether the additional logical channel priority configured by a new logical channel parameter "additionalPriority" is applied for the logical channel. That is, when a logical channel priority adjustment condition is satisfied (e.g., the logical channel contains delay-critical data with remaining time less than the specific threshold), the additional logical channel priority is applied to override the default logical channel priority configured by the field "priority" in the LogicalChannelConfig IE. For the same logical channel configuration, the value of the additional logical channel priority may be smaller than that of the default logical channel priority.

In some implementations, the specific threshold may be configured in an RRC signaling other than the MAC-CellGroupConfig IE and the LogicalChannelConfig IE. For example, there may be a threshold parameter which applies to multiple data logical channels in the RRC signaling. Alternatively, there may be a threshold parameter which applies to multiple data logical channel groups in the RRC signaling.

In some implementations, during the second round of resource allocation, the prioritization of the delay-critical data with tight remaining time may be applied for the corresponding logical channel(s) if any of these delay-critical data remains in the corresponding logical channel(s). That is, in the second round of resource allocation, the delay-critical data with a remaining time less than the specific threshold may be transmitted before other delay-critical data (with a remaining time not less than the specific threshold) and/or non-delay-critical data, regardless of the value of Bj of the logical channel in which the delay-critical data with a remaining time less than the threshold is buffered. Additionally, or optionally, during the second round of resource allocation, the prioritization of the delay-critical data with tight remaining time may not be applied for the corresponding logical channel(s) if none of these delay-critical data remains in the corresponding logical channel(s). That is, in the second round of resource allocation, the remaining data in the corresponding logical channel(s) may be served in a first-in-first-out basis (according to their times of arrival in the logical channel buffer).

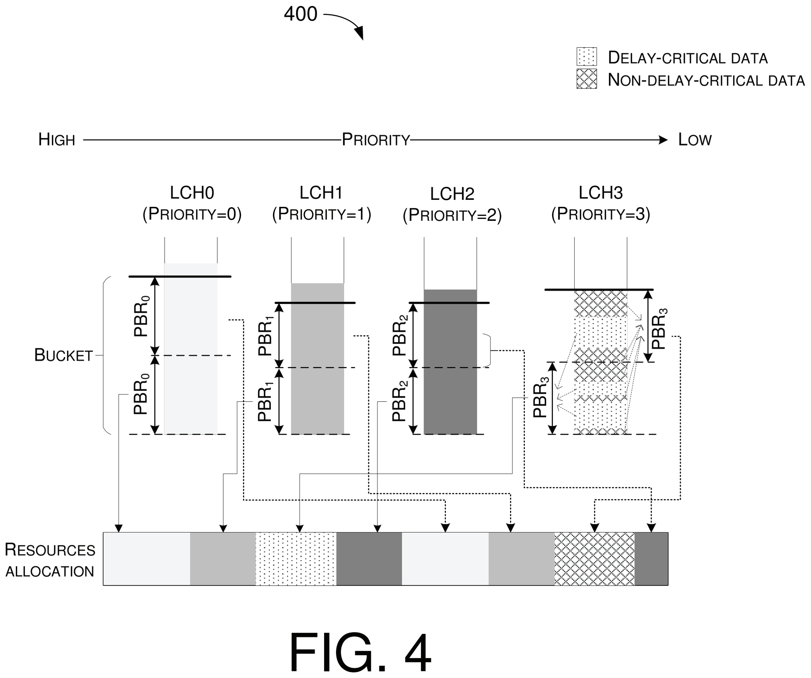

FIG. 4 illustrates an example scenario 400 of the UL resource allocation in the enhanced LCP procedure in accordance with an implementation of the present disclosure. As shown in FIG. 4, each logical channel is configured with a priority, e.g., the priority of value=0 is the highest priority and the priority of value=3 is the lowest priority, where the logical channel with priority=3 has both delay-critical data and non-delay-critical data buffered therein. Specifically, within the logical channel with priority=3, the delay-critical data (e.g., with a remaining time of the associated PDCP discardTimer less than the specific threshold) is allocated with the UL resources prior to the non-delay-critical data (and/or other delay-critical data with a remaining time of the associated PDCP discardTimer greater than or equal to the specific threshold). This way, the delay-critical data with tight remaining time will be transmitted earlier.

### Illustrative Implementations

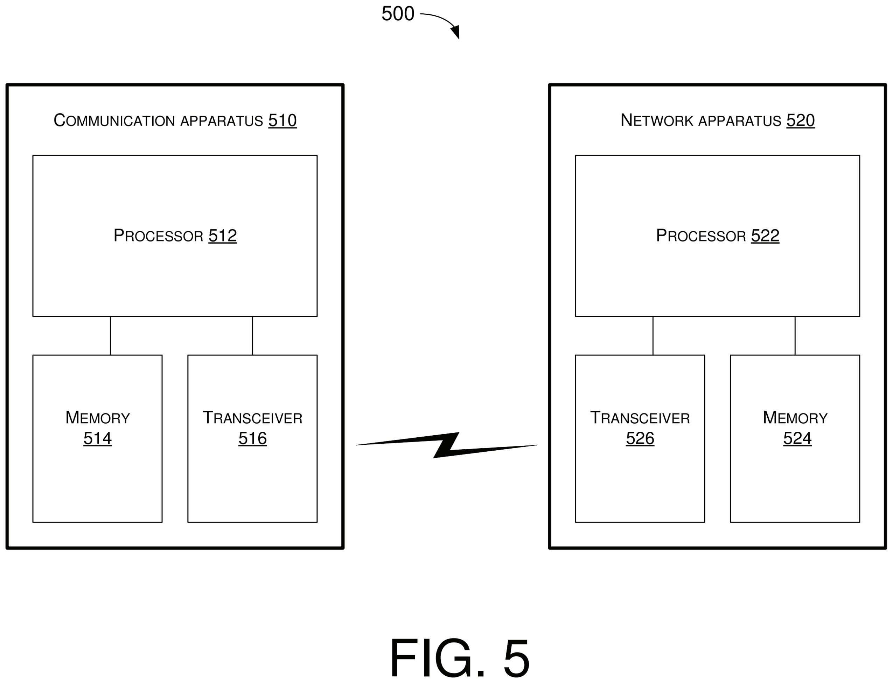

FIG. 5 illustrates an example communication system 500 having an example communication apparatus 510 and an example network apparatus 520 in accordance with an implementation of the present disclosure. Each of communication apparatus 510 and network apparatus 520 may perform various functions to implement schemes, techniques, processes, and methods described herein pertaining to enhanced LCP in mobile communications, including scenarios/schemes described above as well as processes 600 and 700 described below.

Communication apparatus 510 may be a part of an electronic apparatus, which may be a dual-steer device containing one or more UEs such as a portable or mobile apparatus, a wearable apparatus, a wireless communication apparatus, or a computing apparatus. For instance, communication apparatus 510 may be implemented in a smartphone, a smartwatch, a personal digital assistant, an electronic control unit (ECU) in a vehicle, a digital camera, or a computing equipment such as a tablet computer, a laptop computer, or a notebook computer. Communication apparatus 510 may also be a part of a machine type apparatus, which may be an loT, NB-loT, eMTC, IIoT UE, such as an immobile or a stationary apparatus, a home apparatus, a roadside unit (RSU), a wire communication apparatus, or a computing apparatus. For instance, communication apparatus 510 may be implemented in a smart thermostat, a smart fridge, a smart door lock, a wireless speaker, or a home control center. Alternatively, communication apparatus 510 may be implemented in the form of one or more integrated-circuit (IC) chips, such as, for example and without limitation, one or more single-core processors, one or more multi-core processors, one or more reduced-instruction-set computing (RISC) processors, or one or more complex-instruction-set-computing (CISC) processors. Communication apparatus 510 may include at least some of those components shown in FIG. 5, such as a processor 512, for example. Communication apparatus 510 may further include one or more other components not pertinent to the proposed schemes of the present disclosure (e.g., internal power supply, display device and/or user interface device), and, thus, such component(s) of communication apparatus 510 are neither shown in FIG. 5 nor described below in the interest of simplicity and brevity.

Network apparatus 520 may be a part of an electronic apparatus, which may be a network node such as a satellite, a BS, a small cell, a router, or a gateway of a 4G/5G/B5G/6G, NR, loT, NB-loT, or IloT network. Alternatively, network apparatus 520 may be implemented in the form of one or more IC chips, such as, for example and without limitation, one or more single-core processors, one or more multi-core processors, or one or more RISC or CISC processors. Network apparatus 520 may include at least some of those components shown in FIG. 5, such as a processor 522, for example. Network apparatus 520 may further include one or more other components not pertinent to the proposed scheme of the present disclosure (e.g., internal power supply, display device and/or user interface device), and, thus, such component(s) of network apparatus 520 are neither shown in FIG. 5 nor described below in the interest of simplicity and brevity.

In one aspect, each of processor 512 and processor 522 may be implemented in the form of one or more single-core processors, one or more multi-core processors, or one or more CISC processors. That is, even though a singular term "a processor" is used herein to refer to processor 512 and processor 522, each of processor 512 and processor 522 may include multiple processors in some implementations and a single processor in other implementations in accordance with the present disclosure. In another aspect, each of processor 512 and processor 522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 512 and processor 522 is a special-purpose machine specifically designed, arranged and configured to perform specific tasks in a device (e.g., as represented by communication apparatus 510) and a network node (e.g., as represented by network apparatus 520) in accordance with various implementations of the present disclosure.

In some implementations, communication apparatus 510 may also include a transceiver 516 coupled to processor 512 and capable of wirelessly transmitting and receiving data. In some implementations, transceiver 516 may be capable of wirelessly communicating with different types of UEs and/or wireless networks of different RATs. In some implementations, transceiver 516 may be equipped with a plurality of antenna ports (not shown) such as, for example, four antenna ports. That is, transceiver 516 may be equipped with multiple transmit antennas and multiple receive antennas for multiple-input multiple-output (MIMO) wireless communications. In some implementations, network apparatus 520 may also include a transceiver 526 coupled to processor 522. Transceiver 526 may include a transceiver capable of wirelessly transmitting and receiving data. In some implementations, transceiver 526 may be capable of wirelessly communicating with different types of UEs of different RATs. In some implementations, transceiver 526 may be equipped with a plurality of antenna ports (not shown) such as, for example, four antenna ports. That is, transceiver 526 may be equipped with multiple transmit antennas and multiple receive antennas for MIMO wireless communications.

In some implementations, communication apparatus 510 may further include a memory 514 coupled to processor 512 and capable of being accessed by processor 512 and storing data therein. In some implementations, network apparatus 520 may further include a memory 524 coupled to processor 522 and capable of being accessed by processor 522 and storing data therein. Each of memory 514 and memory 524 may include a type of random-access memory (RAM) such as dynamic RAM (DRAM), static RAM (SRAM), thyristor RAM (TRAM), and/or zero-capacitor RAM (Z-RAM). Alternatively, or additionally, each of memory 514 and memory 524 may include a type of read-only memory (ROM) such as mask ROM, programmable ROM (PROM), erasable programmable ROM (EPROM), and/or electrically erasable programmable ROM (EEPROM). Alternatively, or additionally, each of memory 514 and memory 524 may include a type of non-volatile random-access memory (NVRAM) such as flash memory, solid-state memory, ferroelectric RAM (FeRAM), magnetoresistive RAM (MRAM), and/or phase-change memory.

Each of communication apparatus 510 and network apparatus 520 may be a communication entity capable of communicating with each other using various proposed schemes in accordance with the present disclosure. For illustrative purposes and without limitation, a description of capabilities of communication apparatus 510, as a UE, and network apparatus 520, as a network node (e.g., BS), is provided below with processes 600 and 700.

### Illustrative Processes

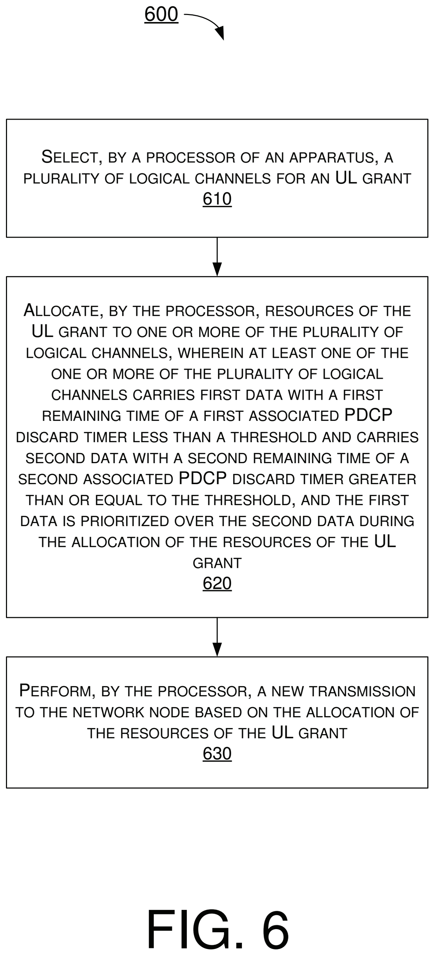

FIG. 6 illustrates an example process 600 in accordance with an implementation of the present disclosure. Process 600 may be an example implementation of above scenarios/schemes, whether partially or completely, with respect to enhanced LCP in mobile communications. Process 600 may represent an aspect of implementation of features of communication apparatus 510. Process 600 may include one or more operations, actions, or functions as illustrated by one or more of blocks 610 to 630. Although illustrated as discrete blocks, various blocks of process 600 may be divided into additional blocks, combined into fewer blocks, or eliminated, depending on the desired implementation. Moreover, the blocks of process 600 may be executed in the order shown in FIG. 6 or, alternatively in a different order. Process 600 may be implemented by or in communication apparatus 510 or any suitable UE or machine type device. Solely for illustrative purposes and without limiting the scope, process 600 is described below in the context of communication apparatus 510, as a UE, and network apparatus 520, as a network node (e.g., a BS such as gNB). Process 600 may begin at block 610.

At block 610, process 600 may involve processor 512 of communication apparatus 510, selecting a plurality of logical channels for an UL grant. Process 600 may proceed from block 610 to block 620.

At block 620, process 600 may involve processor 512 allocating resources of the UL grant to one or more of the plurality of logical channels, wherein at least one of the one or more of the plurality of logical channels carries first data with a first remaining time of a first associated PDCP discard timer less than a threshold and carries second data with a second remaining time of a second associated PDCP discard timer greater than or equal to the threshold, and the first data is prioritized over the second data during the allocation of the resources of the UL grant. Process 600 may proceed from block 620 to block 630.

At block 630, process 600 may involve processor 512 performing, via transceiver 516, a new transmission to network apparatus 520 based on the allocation of the resources of the UL grant.

In some implementations, the second data may be buffered in front of the first data within the at least one of the one or more of the plurality of logical channels.

In some implementations, each of the plurality of logical channels may be configured with a priority, each of the one or more of the plurality of logical channels may be associated with a positive number of tokens, and the resources of the UL grant may be allocated to the one or more of the plurality of logical channels in a decreasing priority order.

In some implementations, the first data may include multiple PDCP SDUs associated with multiple PDCP discard timers, and the multiple PDCP SDUs in the first data may be allocated with the resources of the UL grant in an order of remaining times of the multiple PDCP discard timers.

In some implementations, the threshold may be used (on the first and second remaining times) for triggering a DSR for a corresponding logical channel within a logical channel group.

In some implementations, the threshold may be configured in a MAC-CellGroupConfig IE, a LogicalChannelConfig IE, or another IE of an RRC signaling received from network apparatus 520.

In some implementations, the threshold may be used for determining whether an additional priority is applied for the at least one of the one or more of the plurality of logical channels.

In some implementations, the threshold may be an independent per-LCH remaining time threshold.

In some implementations, the second data may include at least one of delay-critical data and non-delay-critical data.

In some implementations, process 600 may further involve processor 512 performing operations comprising: in an event that any of the resources of the UL grant remains and any of the first data remains after the allocation of the resources of the UL grant, allocating the remaining resources of the UL grant to the plurality of logical channels in a strict decreasing priority order, wherein the remaining first data is prioritized over other remaining data in the at least one of the one or more of the plurality of logical channels during the allocation of the remaining resources of the UL grant.

In some implementations, process 600 may further involve processor 512 performing operations comprising: in an event that any of the resources of the UL grant remains and none of the first data remains after the allocation of the resources of the UL grant, allocating the remaining resources of the UL grant to the plurality of logical channels in a strict decreasing priority order, wherein other remaining data in the at least one of the one or more of the plurality of logical channels is served in a first-in-first-out basis during the allocation of the remaining resources of the UL grant.

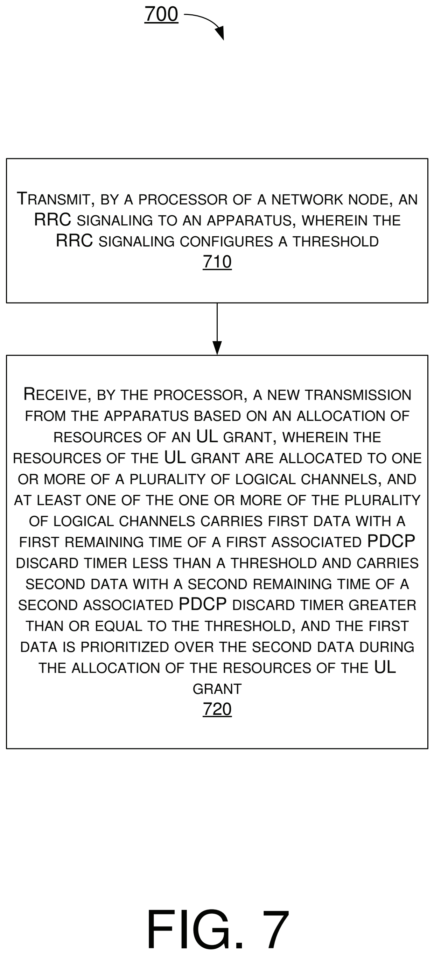

FIG. 7 illustrates an example process 700 in accordance with an implementation of the present disclosure. Process 700 may be an example implementation of above scenarios/schemes, whether partially or completely, with respect to enhanced LCP in mobile communications. Process 700 may represent an aspect of implementation of features of network apparatus 520. Process 700 may include one or more operations, actions, or functions as illustrated by one or more of blocks 710 to 720. Although illustrated as discrete blocks, various blocks of process 700 may be divided into additional blocks, combined into fewer blocks, or eliminated, depending on the desired implementation. Moreover, the blocks of process 700 may be executed in the order shown in FIG. 7 or, alternatively in a different order. Process 700 may be implemented by or in network apparatus 520 as well as any variations thereof. Solely for illustrative purposes and without limiting the scope, process 700 is described below in the context of communication apparatus 510, as a UE, and network apparatus 520, as a network node (e.g., a BS such as gNB). Process 700 may begin at block 710.

At block 710, process 700 may involve processor 522 of network apparatus 520, transmitting, via transceiver 526, an RRC signaling to communication apparatus 510, wherein the RRC signaling configures a threshold. Process 700 may proceed from block 710 to block 720.

At block 720, process 700 may involve processor 522 receiving, via transceiver 526, a new transmission from communication apparatus 510 based on an allocation of resources of an UL grant, wherein the resources of the UL grant are allocated to one or more of a plurality of logical channels, and at least one of the one or more of the plurality of logical channels carries first data with a first remaining time of a first associated PDCP discard timer less than a threshold and carries second data with a second remaining time of a second associated PDCP discard timer greater than or equal to the threshold, and the first data is prioritized over the second data during the allocation of the resources of the UL grant.

In some implementations, the second data may be buffered in front of the first data within the at least one of the one or more of the plurality of logical channels.

In some implementations, each of the plurality of logical channels may be configured with a priority, each of the one or more of the plurality of logical channels may be associated with a positive number of tokens, and the resources of the UL grant may be allocated to the one or more of the plurality of logical channels in a decreasing priority order.

In some implementations, the first data may include multiple PDCP SDUs associated with multiple PDCP discard timers, and the multiple PDCP SDUs in the first data may be allocated with the resources of the UL grant in an order of remaining times of the multiple PDCP discard timers.

In some implementations, the threshold may be used on the first and second remaining times for triggering a DSR for a corresponding logical channel within a logical channel group.

In some implementations, the threshold may be configured in a MAC-CellGroupConfig IE, a LogicalChannelConfig IE, or another IE of the RRC signaling or another RRC signaling.

In some implementations, the threshold may be used for determining whether an additional priority is applied for the at least one of the one or more of the plurality of logical channels.

In some implementations, the threshold may be an independent per-LCH remaining time threshold.

In some implementations, the second data may include at least one of delay-critical data and non-delay-critical data.

In some implementations, in an event that any of the resources of the UL grant remains and any of the first data remains after the allocation of the resources of the UL grant, the remaining resources of the UL grant may be allocated to the plurality of logical channels in a strict decreasing priority order, and the remaining first data is prioritized over other remaining data in the at least one of the one or more of the plurality of logical channels during the allocation of the remaining resources of the UL grant.

In some implementations, in an event that any of the resources of the UL grant remains and none of the first data remains after the allocation of the resources of the UL grant, the remaining resources of the UL grant may be allocated to the plurality of logical channels in a strict decreasing priority order, and other remaining data in the at least one of the one or more of the plurality of logical channels is served in a first-in-first-out basis during the allocation of the remaining resources of the UL grant.

In light of the above-described embodiments, it is noteworthy that, by applying the schemes of the present disclosure, the LCP procedure is enhanced with a specific threshold (e.g., called priorityAdjustmentThreshold or remainingTimeThreshold) to ensure that logical channels carrying delay-critical data with tight remaining time are prioritized for UL resource allocation, which allows the delay requirements to be met for the applications/services that require low-latency communication. Accordingly, the enhanced LCP procedure may provide efficient and effective support of scheduling to realize high system capacity for low-latency services, such as XR services.

### Additional Notes

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. An apparatus, comprising:
a transceiver which, during operation, wirelessly communicates with a network node; and
a processor communicatively coupled to the transceiver such that, during operation, the processor performs operations comprising:
selecting a plurality of logical channels for an uplink (UL) grant;
allocating resources of the UL grant to one or more of the plurality of logical channels, wherein at least one of the one or more of the plurality of logical channels carries first data with a first remaining time of a first associated packet data convergence protocol (PDCP) discard timer less than a threshold and carries second data with a second remaining time of a second associated PDCP discard timer greater than or equal to the threshold, and the first data is prioritized over the second data during the allocation of the resources of the UL grant; and
performing, via the transceiver, a new transmission to the network node based on the allocation of the resources of the UL grant.

2. The apparatus of Claim 1, wherein the second data is buffered in front of the first data within the at least one of the one or more of the plurality of logical channels.

3. The apparatus of Claim 1, wherein each of the plurality of logical channels is configured with a priority, each of the one or more of the plurality of logical channels is associated with a positive number of tokens, and the resources of the UL grant are allocated to the one or more of the plurality of logical channels in a decreasing priority order.

4. The apparatus of Claim 1, wherein the first data comprises multiple PDCP service data units (SDUs) associated with multiple PDCP discard timers, and the multiple PDCP SDUs in the first data are allocated with the resources of the UL grant in an order of remaining times of the multiple PDCP discard timers.

5. The apparatus of Claim 1, wherein the threshold is configured in a MAC-CellGroupConfig information element (IE) of a radio resource control (RRC) signaling received from the network node.

6. The apparatus of Claim 5, wherein the threshold is used for triggering a delay status reporting (DSR) for a corresponding logical channel group (LCG).

7. The apparatus of Claim 1, wherein the threshold is configured in a LogicalChannelConfig information element (IE) of a radio resource control (RRC) signaling received from the network node.

8. The apparatus of Claim 7, wherein the threshold is used for determining whether an additional priority is applied for the at least one of the one or more of the plurality of logical channels.

9. The apparatus of Claim 3, wherein, during operation, the processor further performs operations comprising:
in an event that any of the resources of the UL grant remains and any of the first data remains after the allocation of the resources of the UL grant, allocating the remaining resources of the UL grant to the plurality of logical channels in a strict decreasing priority order, wherein the remaining first data is prioritized over other remaining data in the at least one of the one or more of the plurality of logical channels during the allocation of the remaining resources of the UL grant.

10. The apparatus of Claim 3, wherein, during operation, the processor further performs operations comprising:
in an event that any of the resources of the UL grant remains and none of the first data remains after the allocation of the resources of the UL grant, allocating the remaining resources of the UL grant to the plurality of logical channels in a strict decreasing priority order, wherein other remaining data in the at least one of the one or more of the plurality of logical channels is served in a first-in-first-out basis during the allocation of the remaining resources of the UL grant.

11. A network node, comprising:
a transceiver which, during operation, wirelessly communicates with an apparatus; and
a processor communicatively coupled to the transceiver such that, during operation, the processor performs operations comprising:
transmitting, via the transceiver, a radio resource control (RRC) signaling to the apparatus, wherein the RRC signaling configures a threshold; and
receiving, via the transceiver, a new transmission from the apparatus based on an allocation of resources of an uplink (UL) grant, wherein the resources of the UL grant are allocated to one or more of a plurality of logical channels, and at least one of the one or more of the plurality of logical channels carries first data with a first remaining time of a first associated packet data convergence protocol (PDCP) discard timer less than a threshold and carries second data with a second remaining time of a second associated PDCP discard timer greater than or equal to the threshold, and the first data is prioritized over the second data during the allocation of the resources of the UL grant.

12. The network node of Claim 11, wherein the second data is buffered in front of the first data within the at least one of the one or more of the plurality of logical channels.

13. The network node of Claim 11, wherein each of the plurality of logical channels is configured with a priority, each of the one or more of the plurality of logical channels is associated with a positive number of tokens, and the resources of the UL grant are allocated to the one or more of the plurality of logical channels in a decreasing priority order.

14. The network node of Claim 11, wherein the first data comprises multiple PDCP service data units (SDUs) associated with multiple PDCP discard timers, and the multiple PDCP SDUs in the first data are allocated with the resources of the UL grant in an order of remaining times of the multiple PDCP discard timers.

15. The network node of Claim 11, wherein the threshold is configured in a MAC-CellGroupConfig information element (IE) or a LogicalChannelConfig IE of the RRC signaling.
